(19) Europäisches Patentamt
European Patent Office
Office européen des brevets

(11) **EP 2 490 139 B1**

(12) **EUROPEAN PATENT SPECIFICATION**

(45) Date of publication and mention
of the grant of the patent:
**01.04.2020 Bulletin 2020/14**

(51) Int Cl.:
***G06F 16/28*** (2019.01)

(21) Application number: **12155404.2**

(22) Date of filing: **14.02.2012**

(54) **A method of constructing a mixture model**

Verfahren zur Konstruktion eines Mischmodells

Procédé de construction d'un modèle de mélange

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.02.2011 US 201113027829**

(43) Date of publication of application:
**22.08.2012 Bulletin 2012/34**

(73) Proprietor: **General Electric Company**
**Schenectady, NY 12345 (US)**

(72) Inventors:
• **Callan, Robert Edward**
**Eastleigh, Hampshire SO53 4YG (GB)**
• **Larder, Brian**
**Eastleigh, Hampshire SO53 4YG (GB)**

(74) Representative: **Openshaw & Co.**
**8 Castle Street**
**Farnham, Surrey GU9 7HR (GB)**

(56) References cited:
**US-A1- 2010 042 563**

• Jaakko Hollm'en ET AL: "Mixture models and frequent sets: combining global and local methods for 0-1 data", , 1 January 2003 (2003-01-01), pages 289-293, XP055025810, Retrieved from the Internet: URL:http://www.siam.org/proceedings/datami ning/2003/dm03_32HollmenJ.pdf [retrieved on 2012-04-26]

• Nitesh V Chawla ET AL: "Learning From Labeled And Unlabeled Data: An Empirical Study Across Techniques And Domains", , 1 January 2005 (2005-01-01), XP055025836, USA Retrieved from the Internet: URL:http://www.aaai.org/Papers/JAIR/Vol23/ JAIR-2308.pdf [retrieved on 2012-04-26]

• "A Mixture Model for Contextual Text Mining", , 1 January 2006 (2006-01-01), XP055025811, Retrieved from the Internet: URL:http://delivery.acm.org/10.1145/116000 0/1150482/p649-mei.pdf?ip=145.64.134.242&a cc=ACTIVE SERVICE&CFID=79167061&CFTOKEN=6531020 6&__a cm__=1335446465_69549282d9dff54a74cef15cc 8 1aa80c [retrieved on 2012-04-26]

• I Karkkainen ET AL: "Gradual model generator for single-pass clustering", 2013 IEEE 13th International Conference on Data Mining, 27 November 2005 (2005-11-27), page 4 pp., XP055555574, ISSN: 1550-4786, DOI: 10.1109/ICDM.2005.73

• I Karkkainen ET AL: "Gradual model generator for single-pass clustering", 2013 IEEE 13th International Conference on Data Mining, 1 January 2005 (2005-01-01), page 4 pp., XP055559697, ISSN: 1550-4786, DOI: 10.1109/ICDM.2005.73

**Description**

BACKGROUND OF THE INVENTION

Data mining is a technology used to extract information and value from data. Data mining algorithms are used in many applications such as predicting shoppers' spending habits for targeted marketing, detecting credit card fraudulent transactions, predicting a customer's navigation path through a website, failure detection in machines, etc. Data mining uses a broad range of algorithms that have been developed over many years by the Artificial Intelligence (AI) and statistical modeling communities. There are many different classes of algorithms but they all share some common features such as (a) a model that represents (either implicitly or explicitly) knowledge of the data domain, (b) a model building or learning phase that uses training data to construct a model, and (3) an inference facility that takes new data and applies a model to the data to make predictions. A known example is a linear regression model where a first variable is predicted from a second variable by weighting the value of the second variable and summing the weighted value with a constant value. The weight and constant values are parameters of the model.

Mixture models are commonly used models for data mining applications within the academic research community as describe by G McLachlan and D Peel in Finite Mixture Models, John Wiley & Sons, (2000). There are variations on the class of mixture model such a Mixtures of Experts and Hierarchical Mixtures of Experts. There are also well documented algorithms for building mixture models. One example is Expectation Maximization (EM). Such mixture models are generally constructed by identifying clusters or components in the data and fitting appropriate mathematical functions to each of the clusters.

US 2010/0042563 A1 relates to training mathematical models which describe a given dataset and classifying each point in the data using probalistic classification.

BRIEF DESCRIPTION OF THE INVENTION

There is provided a method of generating a general mixture model in accordance with claim 1 herein.

BRIEF DESCRIPTION OF THE DRAWINGS

In the drawings:

FIG. 1 is a flow chart depicting a method of generating a general mixture model according to one embodiment of the present invention.
FIG. 2 is a flow chart depicting a method of filtering components from subset mixture models as part of the method depicted in FIG. 1.
FIG. 3 is a chart depicting an example of filtering of a dataset according to the method of generating a general mixture model of FIG. 1.
FIG. 4 is a chart depicting a subset mixture model of a first subset.
FIG. 5 is a chart depicting a subset mixture model of a second subset.
FIG. 6 is a chart depicting a general mixture model of constructed by the method disclosed in FIG. 1.

DETAILED DESCRIPTION

In the following description, for the purposes of explanation, numerous specific details are set forth in order to provide a thorough understanding of the technology described herein. It will be evident to one skilled in the art, however, that the exemplary embodiments may be practiced without these specific details. In other instances, structures and device are shown in diagram form in order to facilitate description of the exemplary embodiments.

The exemplary embodiments are described below with reference to the drawings. These drawings illustrate certain details of specific embodiments that implement the module, method, and computer program product described herein. However, the drawings should not be construed as imposing any limitations that may be present in the drawings. The method and computer program product may be provided on any machine-readable media for accomplishing their operations. The embodiments may be implemented using an existing computer processor, or by a special purpose computer processor incorporated for this or another purpose, or by a hardwired system.

As noted above, embodiments described herein include a computer program product comprising machine-readable media for carrying or having machine-executable instructions or data structures stored thereon. Such machine-readable media can be any available media, which can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium that can be used to carry or store desired program code in the form of machine-executable instructions or data structures and that can be accessed by a general purpose or special purpose computer or other machine with a processor. When information is transferred or provided over a network or another communication connection (either hardwired, wireless, or a combination of hardwired or wireless) to a machine, the machine properly views the connection as a machine-readable medium. Thus, any such a connection is properly termed a machine-readable medium. Combinations of the above are also included within the scope of machine-readable media. Machine-executable instructions comprise, for example, instructions and data, which cause a general purpose computer, special purpose computer, or special purpose processing machines to perform a certain function or group of functions.

Embodiments will be described in the general context of method steps that may be implemented in one embodiment by a program product including machine-executable instructions, such as program code, for example, in the form of program modules executed by machines in networked environments. Generally, program modules include routines, programs, objects, components, data structures, etc. that have the technical effect of performing particular tasks or implement particular abstract data types. Machine-executable instructions, associated data structures, and program modules represent examples of program code for executing steps of the method disclosed herein. The particular sequence of such executable instructions or associated data structures represent examples of corresponding acts for implementing the functions described in such steps.

Embodiments may be practiced in a networked environment using logical connections to one or more remote computers having processors. Logical connections may include a local area network (LAN) and a wide area network (WAN) that are presented here by way of example and not limitation. Such networking environments are commonplace in office-wide or enterprise-wide computer networks, intranets and the internet and may use a wide variety of different communication protocols. Those skilled in the art will appreciate that such network computing environments will typically encompass many types of computer system configuration, including personal computers, hand-held devices, multiprocessor systems, microprocessor-based or programmable consumer electronics, network PCs, minicomputers, mainframe computers, and the like.

Embodiments may also be practiced in distributed computing environments where tasks are performed by local and remote processing devices that are linked (either by hardwired links, wireless links, or by a combination of hardwired or wireless links) through a communication network. In a distributed computing environment, program modules may be located in both local and remote memory storage devices.

An exemplary system for implementing the overall or portions of the exemplary embodiments might include a general purpose computing device in the form of a computer, including a processing unit, a system memory, and a system bus, that couples various system components including the system memory to the processing unit. The system memory may include read only memory (ROM) and random access memory (RAM). The computer may also include a magnetic hard disk drive for reading from and writing to a magnetic hard disk, a magnetic disk drive for reading from or writing to a removable magnetic disk, and an optical disk drive for reading from or writing to a removable optical disk such as a CD-ROM or other optical media. The drives and their associated machine-readable media provide nonvolatile storage of machine-executable instructions, data structures, program modules and other data for the computer.

Technical effects of the method disclosed in the embodiments include more efficiently providing accurate models for mining complex data sets for predictive patterns. The method introduces a high degree of flexibility for exploring data from different perspectives using essentially a single algorithm that is tasked to solve different problems. Consequently, the technical effect includes more efficient data exploration, anomaly detection, regression for predicting values and replacing missing data, and segmentation of data. Examples of how such data can be efficiently explored using the disclosed method include targeted marketing based on customers' buying habits, reducing credit risk by identifying risky credit applicants, and predictive maintenance from understanding an aircraft's state of health.

The present invention is related to generating a general mixture model of a dataset. More particularly, the dataset is partitioned into two or more subsets, a subset mixture model is generated for each subset, and then the subset mixture models are combined to generate the general mixture model of the dataset.

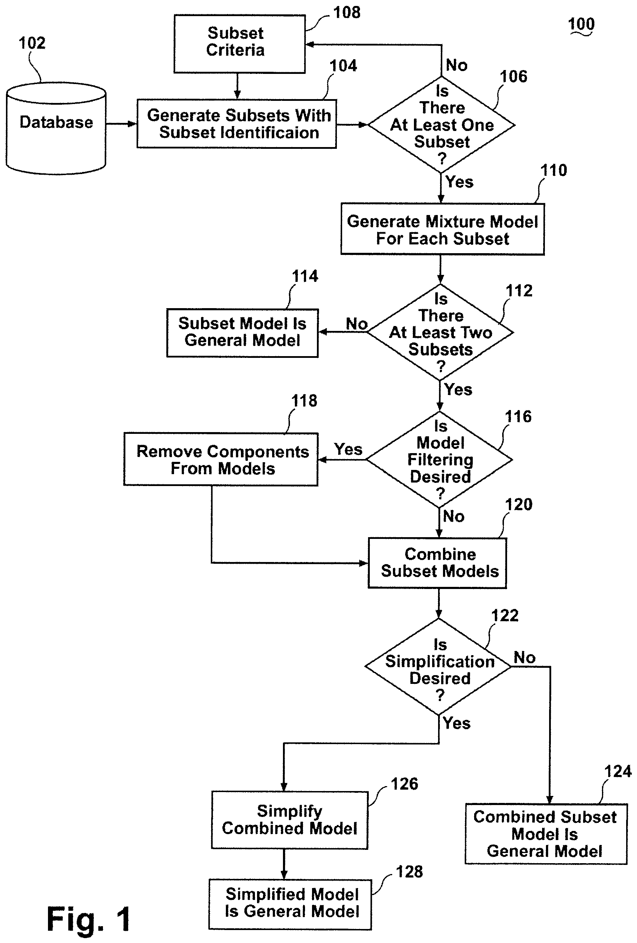

Referring now to FIG. 1, the method of generating a general mixture model 100 is disclosed. First a dataset contained in a database 102 along with subset criteria 108 are provided for generating subsets with a subset identification 104. The database with the constituent dataset can be stored in an electronic memory. The dataset can contain multiple dimensions or parameters with each dimension having one or more values associated with it. The values can be either discrete values or continuous values. For example, a dataset can comprise a dimension of gas turbine engine with discrete values of CFM56, CF6, CF34, GE90, and GEnx. The discrete values represent various models of gas turbine engines manufactured and sold by General Electric Corporation. The dataset can further comprise another dimension titled air frame with discrete values of B737-700, B737700ER, B747-8, B777-200LR, B777-300ER, and B787, representing various airframes on which the gas turbine engines of the gas turbine engine dimension of the dataset can be mounted. Continuing with this example, the dataset may further comprise a dimension titled thrust with continuous values, such as values in the range of 18,000 pounds-force to 115,000 pounds force (80 kN - 512 kN).

The subset criteria 108 can be one or more values of one or more dimensions of the dataset that can be used to filter the dataset. The subset criteria can be stored in a relational database or designated by any other known method. Generally, the subset criteria 108 is formulated by the user of the dataset, based on what the user wants to learn from the dataset. The subset criteria 108 can contain any number of individual criteria for filtering and partitioning the data in the dataset. Continuing with the example above, subset criteria 108 may comprise three different elements such as GE90 engines mounted on B747-8, GEnx engine mounted on a B777-300ER, and a GEnx mounted on B787. Although this is an example of a two dimensional subset criteria with three elements, the subset criteria may include any number of dimensions up to the number of dimensions in the dataset and may contain any number of elements.

Generating the subsets and subset identification 104 comprises filtering through the dataset and identifying each element within each of the subsets. The number of subsets is equivalent to the number of elements in the selection criteria. The filtering process may be accomplished by a computer software element running on a processor with access to the electronic memory containing the database 102. After or contemporaneous with the filtering, each of the subsets is assigned a subset identifier to distinguish the subset and its constituent elements from each of the other subsets and their constituent elements. The subset identifier can be a text string or any other known method of identifying the subsets generated at 104.

It is next assessed if there is at least one subset at 106. If there is not at least one subset, then the method 100 returns to 108 to accept new subset criteria that produce at least one subset. If there is at least one subset, then the method 100 generates a mixture model for each of the subsets at 110. The generation of mixture models is also commonly referred to as training in the field of data mining. The mixture model for each of the subsets can be generated by any known method and as any known type of mixture model, a non-limiting example being a Gaussian Mixture Model trained using expectation maximization (EM). The process of generating a mixture model for each subset results in a mathematical functional that represents the subset density. In the example of modeling continuous random vectors, the mathematical functional representation of each of the subsets is a scaled summation of probability density functions (pdf). Each of the pdf corresponds to a component or cluster of data elements within the subset for which the mixture model is being generated. In other words, the method of generating a mixture model of each of the subsets 110 is conducted by a software element running on a processor, where the software element considers all data elements within the subset, clusters the data elements into one or more components, fits a pdf to each of components, and ascribes a scaling factor to each of the components to generate a mathematical functional representation of the data. A non-limiting example of a mixture model is a Gaussian or Normal distribution mixture model of the form:

$$p(X) = \sum_{k=1}^{K} \pi_k N(X|\mu_k, \sum_k),$$

where $p(X)$ is a mathematical functional representation of the subset,

$X$ is a multidimensional vector representation of the variables,

$k$ is an index referring to each of the components in the subset,

$K$ is the total number of components in the subset,

$\pi_k$ is a scalar scaling factor corresponding to cluster $k$ with the sum of all $\pi_k$ for all K clusters equaling 1,

$N(X|\mu_k, \Sigma_k)$ is a normal probability density function of vector $X$ for a component mean $\mu_k$ and covariance $\Sigma_k$.

If the vector $X$ is of a single dimension, then $\Sigma_k$ is the variance of $X$ and if $X$ has two or greater dimensions, then $\Sigma_k$ is a covariance matrix of $X$.

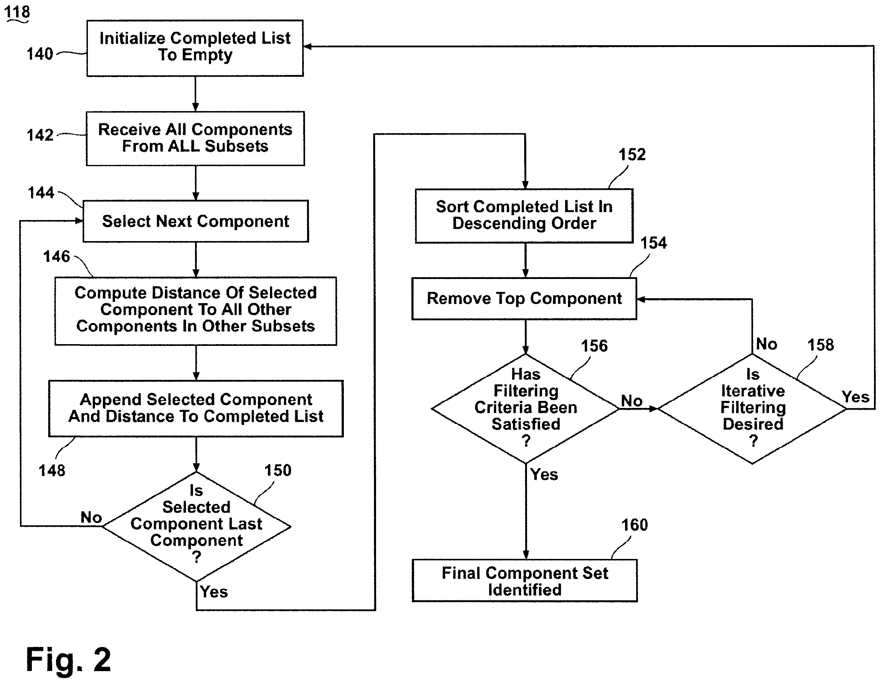

After the mixture models are generated for each subset at 110 it is determined if there are at least two subsets at 112. If there are not at least two subsets, then the single subset mixture model generated at 110 is the general mixture model. If, however, it is determined that there are at least two subsets at 112, then it is next determined if filtering of the model components is desired at 116. If filtering is desired at 116, then one or more components are removed from the model at 118. The filtering method of 118 is described in greater detail in conjunction with FIG. 2. Once the filtering is done at 118 or if filtering was not desired at 116, then the method 100 proceeds to 120 where the subset models are combined.

Combining subset models at 120 can comprise concatenating the mixture models generated for each of the subsets to generate a combined model. Alternatively, the combining subset models can comprise independently scaling each of the mixture models of the individual subsets prior to concatenating each of the mixture models to generate a combined model.

At 122, it is determined if simplification of the model is desired. If simplification is not desired at 122, then the combined subset model is the general model at 124. If simplification is desired at 122, then a simplification of the combined model is performed at 126 and the simplified combined model is considered the general model at 128. The simplification 126 can comprise combining one or more clusters from two or more different subsets. The simplification 126 can further comprise removing one or more components from the combined mixture models of the subsets.

Referring now to FIG. 2 the method of filtering the components of the individual subset mixture models at 118, prior to combining the subset mixture models, is described. First, a completed list for tabulating each component and associated distances to other components is cleared at 140. Next, all of the components from all of the subsets are received by a processor and associated electronic memory at 142. A component from all of the components is selected at 144 and the distance of the selected component to all other components in other subsets is determined at 146. In other words, the selected component is compared to all other components with a subset identifier that is different from the subset identifier of the selected component. The distance can be computed by any known method including, but not limited to, the Kullback Leibler divergence. The component and the associated distances to all the other components of other subsets are tabulated and appended to the completed list at 148. In other words, the completed list contains the distance from the component to all components of the other subsets. At 150, it is determined if the selected component is the last component. If it is not, then the method 118 returns to 144 to select the next component. If, however, at 150 it is determined that the selected component is the last component, then the completed list is updated for all of the components of all of the subsets and the method proceeds to 152, where the completed list is sorted in descending order of the distances calculated at 146. At 154, the top component on the completed list, or the component that has the greatest distance to all the other components of all the other subsets, is removed or filtered out. At 156, it is determined if filtering criteria have been satisfied. The filtering criteria, for example, can be a predetermined total number of components to be filtered. Alternatively, the filtering criteria can be the filtering of a predetermined percentage of the total number of components. If the filtering criteria are met at 156, then the final component set is identified at 160. If, however, the filtering criteria are not met at 156, then it is determined at 158 if iterative filtering is desired. The desire for iterative filtering can be set by the user of the method 118. If iterative filtering is not desired at 158, then the method returns to 154 to remove from the remaining components, the component with the greatest distance to all other components from other subsets. At 158, if it is determined that iterative filtering is desired, then the method 118 returns to 140.

Iterative filtering means that the method 118 recalculates the distances for each component to every other component and generates a new completed list by executing 140 through 152 every time a component is removed from the mixture model. The distances between components can change and, therefore, the relative order of the components on the completed list can change as components are removed from the mixture model. Therefore, by executing iterative filtering, one can ensure with greater confidence that the component being removed is the component with the greatest distance to the components from every other subset. However, in some cases, one may not want to execute iterative filtering, because iterative filtering is more computationally intensive and, therefore, more time consuming. In other words, when executing the filtering method 118 disclosed herein, one may assess the trade-off between filtering performance and time required to filter to determine if iterative filtering is desired at 158.

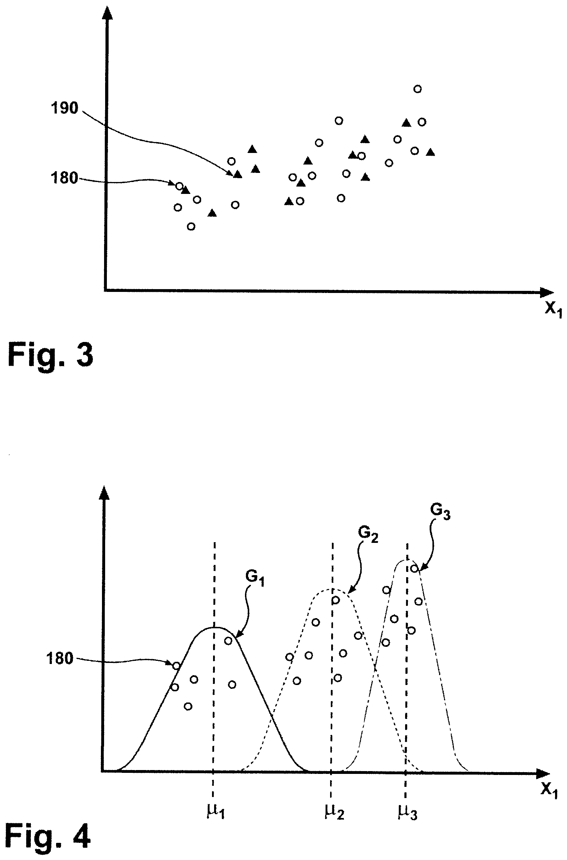

FIGS. 3-6 depict an example of executing the foregoing method 100 of generating a general mixture model. In FIG. 3, data 180 and 190 from a dataset is plotted against a variable $x_1$. The data is further partitioned into a first subset 180 depicted as open circles on the graph and a second subset 190 depicted as closed triangles on the graph according to the procedures described in conjunction with 104 of method 100. Although the method 100 can be applied to multivariate analysis with many subsets, a single variable data dependency with only two subsets is depicted in this example for simplicity in visualizing the method 100.

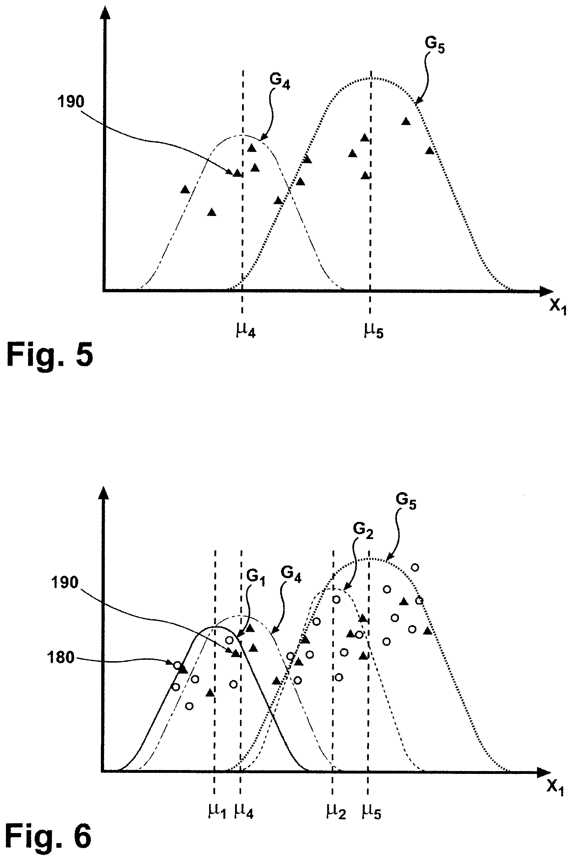

FIGS. 4 and 5 depict the generation of a mixture model as at step 110 for the first subset 180 and second subset 190, respectively. In the case of the first subset 180, three components are identified and each is fit to a scaled Gaussian distribution G1, G2, and G3 with means $\mu_1$, $\mu_2$, and $\mu_3$, respectively. In the case of the second subset 190, two components are identified and each is fit to a scaled Gaussian distribution G4 and G5 with means $\mu_4$ and $\mu_5$, respectively. Thus, the mixture model of the first subset 180 is represented by the envelope of the scaled fitting function of the constituent components G1, G2, and G3. Similarly, the mixture model of the second subset 190 is represented by the envelope of the scaled fitting function of the constituent components G4 and G5. In FIG. 6, the combined constituent scaled fitting functions of the general mixture model are depicted, as at step 120 of the method 100, after filtering. In this example, it can be seen that in the filtering step 118, it was found that the component with fitting function G3 was at a distance from the components of the other subset G4 and G5 that exceeded some predetermined value (not shown), and therefore the component G3 was removed from the general mixture model of FIG. 6.

This written description uses examples to disclose the invention, including the best mode, and also to enable any person skilled in the art to make and use the invention. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

**Claims**

1. A method (100) of generating a general mixture model of a dataset stored in a non-transitory medium (102) comprising the steps of:

    providing subset criteria (108) for defining subsets of the dataset, the subset criteria comprising one or more elements of one or more dimensions of the dataset;
    filtering through the dataset on a processor, by use of the subset criteria;
    partitioning in the processor the dataset into subsets (180, 190) based on the subset criteria (108), wherein the number of subsets (180, 190) is equivalent to the number of elements in the subset criteria;

assigning an identifier to each subset (180, 190);

generating (110) a subset mixture model for each subset (180, 190), each subset mixture model comprising one or more components ($G_1$, $G_2$, $G_3$; $G_4$, $G_5$), each component of a subset mixture model of a subset (180, 190) being representative of a cluster of data elements within that subset (180, 190); and

if there are at least two subsets, filtering the components ($G_1$, $G_2$, $G_3$; $G_4$, $G_5$) to remove one or more of the components ($G_1$, $G_2$, $G_3$; $G_4$, $G_5$) and subsequently combining (120) the subset mixture models for each of the at least two subsets (180, 190) into the general mixture model, wherein the combining step (120) comprises concatenating the subset mixture models; and if there is not at least two subsets (180, 190), designating the subset mixture model as the general mixture model.

2. The method of claim 1 wherein the subset criteria include one of being defined in a relational database and filtering the dataset by at least one dimension.

3. The method of claims 1 or 2, wherein the generating step includes, for at least one component ($G_1$, $G_2$, $G_3$; $G_4$, $G_5$) of a subset mixture model, fitting a function to at least one component of a subset, scaling fitting functions by a scaling factor, and summing scaled fitting functions.

4. The method of claim 3, wherein the function is a probability density function.

5. The method of claim 4, wherein the probability density function is a normal distribution function.

6. The method of claim 3, wherein the scaling factor is a scalar value.

7. The method of claim 4, wherein the sum of all of the scaling factors corresponding to each of the fitting functions of a subset is 1.

8. The method of claim 1, wherein the filtering of the components ($G_1$, $G_2$, $G_3$; $G_4$, $G_5$) to remove one or more of the components ($G_1$, $G_2$, $G_3$; $G_4$, $G_5$) comprises selecting (144) a component ($G_1$, $G_2$, $G_3$; $G_4$, $G_5$) and determining (146) a distance between the selected component ($G_1$, $G_2$, $G_3$; $G_4$, $G_5$) and all of the components ($G_1$, $G_2$, $G_3$; $G_4$, $G_5$) from subsets other than the subset corresponding to the selected component ($G_1$, $G_2$, $G_3$; $G_4$, $G_5$).

9. The method of claim 8, wherein the filtering of the components ($G_1$, $G_2$, $G_3$; $G_4$, $G_5$) to remove one or more of the components ($G_1$, $G_2$, $G_3$; $G_4$, $G_5$) com-

prises removing the component ($G_1$, $G_2$, $G_3$; $G_4$, $G_5$) with the greatest distance.

**Patentansprüche**

1. Verfahren (100) zum Erzeugen eines allgemeinen Mischmodells eines Datensatzes, der in einem nichtflüchtigen Datenträger (102) gespeichert ist, umfassend die folgenden Schritte:

Bereitstellen von Teilmengenkriterien (108) zum Definieren von Teilmengen des Datensatzes, wobei die Teilmengenkriterien ein oder mehrere Elemente einer oder mehrerer Dimensionen des Datensatzes umfassen;

Filtern durch den Datensatz auf einem Prozessor unter Verwendung der Teilmengenkriterien;

Partitionieren des Datensatzes in Teilmengen (180, 190) in dem Prozessor basierend auf den Teilmengenkriterien (108), wobei die Anzahl an Teilmengen (180, 190) der Anzahl an Elementen in den Teilmengenkriterien entspricht;

Zuweisen eines Bezeichners zu jeder Teilmenge (180, 190);

Erzeugen (110) eines Teilmengenmischmodells für jede Teilmenge (180, 190), wobei jedes Teilmengenmischmodell eine oder mehrere Komponenten ($G_1$, $G_2$, $G_3$; $G_4$, $G_5$) umfasst, wobei jede Komponente ein Teilmengenmischmodell einer Teilmenge (180, 190) repräsentativ für einen Cluster von Datenelementen innerhalb dieser Teilmenge (180, 190) ist; und

wenn es wenigstens zwei Teilmengen gibt, Filtern der Komponenten ($G_1$, $G_2$, $G_3$, $G_4$, $G_5$), um eine oder mehrere der Komponenten ($G_1$, $G_2$, $G_3$, $G_4$, $G_5$) zu entfernen, und anschließendes Kombinieren (120) die Teilmengenmischmodelle für jede der wenigstens zwei Teilmengen (180, 190) in das allgemeine Mischmodell, wobei der Kombinierungsschritt (120) ein Verketten der Teilmengenmischmodelle umfasst; und wenn es nicht wenigstens zwei Teilmengen (180, 190) gibt, Festlegen des Teilmengenmischmodells als allgemeines Mischmodell.

2. Verfahren nach Anspruch 1, wobei die Teilmengenkriterien eines beinhalten, das in einer relationalen Datenbank definiert ist, und Filtern des Datensatzes durch wenigstens eine Dimension.

3. Verfahren nach den Ansprüchen 1 oder 2, wobei der Erzeugungsschritt für wenigstens eine Komponente ($G_1$, $G_2$, $G_3$; $G_4$, $G_5$) eines Teilmengenmischmodells ein Anpassen einer Funktion an wenigstens eine Komponente einer Teilmenge, ein Skalieren von Anpassungsfunktionen um einen Skalierungsfaktor und ein Summieren von skalierten Anpassungsfunktionen beinhaltet.

**4.** Verfahren nach Anspruch 3, wobei die Funktion eine Wahrscheinlichkeitsdichtefunktion ist.

**5.** Verfahren nach Anspruch 4, wobei die Wahrscheinlichkeitsdichtefunktion eine Normalverteilungsfunktion ist.

**6.** Verfahren nach Anspruch 3, wobei der Skalierungsfaktor ein skalarer Wert ist.

**7.** Verfahren nach Anspruch 4, wobei die Summe aller Skalierungsfaktoren, die jeder der Anpassungsfunktionen einer Teilmenge entsprechen, 1 ist.

**8.** Verfahren nach Anspruch 1, wobei das Filtern der Komponenten ($G_1$, $G_2$, $G_3$; $G_4$, $G_5$), um eine oder mehrere der Komponenten ($G_1$, $G_2$, $G_3$; $G_4$, $G_5$) zu entfernen, ein Auswählen (144) einer Komponente ($G_1$, $G_2$, $G_3$; $G_4$, $G_5$) und ein Bestimmen (146) eines Abstands zwischen der ausgewählten Komponente ($G_1$, $G_2$, $G_3$; $G_4$, $G_5$) und allen Komponenten ($G_1$, $G_2$, $G_3$; $G_4$, $G_5$) aus anderen Teilmengen als der Teilmenge, die der ausgewählten Komponente ($G_1$, $G_2$, $G_3$; $G_4$, $G_5$) entspricht, umfasst.

**9.** Verfahren nach Anspruch 8, wobei das Filtern der Komponenten ($G_1$, $G_2$, $G_3$; $G_4$, $G_5$), um eine oder mehrere der Komponenten ($G_1$, $G_2$, $G_3$; $G_4$, $G_5$) zu entfernen, das Entfernen der Komponente ($G_1$, $G_2$, $G_3$; $G_4$, $G_5$) mit dem größten Abstand umfasst.

**Revendications**

**1.** Procédé (100) de génération d'un modèle de mélange général d'un ensemble de données stocké sur un support non-transitoire (102) comprenant les étapes consistant à :

fournir des critères de sous-ensemble (108) permettant de définir des sous-ensembles de l'ensemble de données, les critères de sous-ensemble comprenant un ou plusieurs éléments d'une ou plusieurs dimensions de l'ensemble de données ;
effectuer un filtrage de l'ensemble de données sur un processeur, à l'aide des critères de sous-ensemble ;
partitionner dans le processeur l'ensemble de données en sous-ensembles (180, 190) en fonction des critères de sous-ensemble (108), le nombre de sous-ensembles (180, 190) étant équivalent au nombre d'éléments dans les critères de sous-ensemble ;
attribuer un identifiant à chaque sous-ensemble (180, 190) ;

générer (110) un modèle de mélange de sous-ensemble pour chaque sous-ensemble (180, 190), chaque modèle de mélange de sous-ensemble comprenant une ou plusieurs composantes ($G_1$, $G_2$, $G_3$ ; $G_4$, $G_5$), chaque composante d'un modèle de mélange de sous-ensemble d'un sous-ensemble (180, 190) étant représentative d'une grappe d'éléments de données au sein de ce sous-ensemble (180, 190) ; et
s'il y a au moins deux sous-ensembles, filtrer les composantes ($G_1$, $G_2$, $G_3$ ; $G_4$, $G_5$) de façon à éliminer une ou plusieurs des composantes ($G_1$, $G_2$, $G_3$ ; $G_4$, $G_5$) et incorporer (120) ensuite les modèles de mélange de sous-ensemble pour chacun des au moins deux sous-ensembles (180, 190) dans le modèle de mélange général, l'étape d'incorporation (120) comprenant la concaténation des modèles de mélange des sous-ensembles ; et s'il n'y a pas au moins deux sous-ensembles (180, 190), désigner le modèle de mélange du sous-ensemble comme étant le modèle de mélange général.

**2.** Procédé selon la revendication 1, dans lequel les critères de sous-ensemble comportent soit une définition dans une base de données relationnelle, soit un filtrage de l'ensemble de données selon au moins une dimension.

**3.** Procédé selon les revendications 1 ou 2, dans lequel l'étape de génération comporte, pour au moins une composante ($G_1$, $G_2$, $G_3$ ; $G_4$, $G_5$) d'un modèle de mélange de sous-ensemble, l'adaptation d'une fonction à au moins une composante d'un sous-ensemble, la mise à l'échelle de fonctions d'adaptation selon un facteur de mise à l'échelle, et la sommation de fonctions d'adaptation mises à l'échelle.

**4.** Procédé selon la revendication 3, dans lequel la fonction est une fonction de densité de probabilité.

**5.** Procédé selon la revendication 4, dans lequel la fonction de densité de probabilité est une fonction de distribution normale.

**6.** Procédé selon la revendication 3, dans lequel le facteur de mise à l'échelle est une valeur scalaire.

**7.** Procédé selon la revendication 4, dans lequel la somme de tous les facteurs de mise à l'échelle correspondant à chacune des fonctions d'adaptation d'un sous-ensemble est 1.

**8.** Procédé selon la revendication 1, dans lequel le filtrage des composantes ($G_1$, $G_2$, $G_3$ ; $G_4$, $G_5$) de façon à éliminer une ou plusieurs des composantes ($G_1$, $G_2$, $G_3$ ; $G_4$, $G_5$) comprend la sélection (144) d'une composante ($G_1$, $G_2$, $G_3$ ; $G_4$, $G_5$) et la déter-

mination (146) d'une distance entre la composante sélectionnée ($G_1$, $G_2$, $G_3$ ; $G_4$, $G_5$) et toutes les composantes ($G_1$, $G_2$, $G_3$; $G_4$, $G_5$) de sous-ensembles autres que le sous-ensemble correspondant à la composante sélectionnée ($G_1$, $G_2$, $G_3$ ; $G_4$, $G_5$).

9. Procédé selon la revendication 8, dans lequel le filtrage des composantes ($G_1$, $G_2$, $G_3$ ; $G_4$, $G_5$) de façon à éliminer une ou plusieurs des composantes ($G_1$, $G_2$, $G_3$ ; $G_4$, $G_5$) comprend l'élimination de la composante ($G_1$, $G_2$, $G_3$ ; $G_4$, $G_5$) présentant la plus grande distance.

100

**Fig. 1**

**Fig. 2**

118

140 — Initialize Completed List To Empty

142 — Receive All Components From ALL Subsets

144 — Select Next Component

146 — Compute Distance Of Selected Component To All Other Components In Other Subsets

148 — Append Selected Component And Distance To Completed List

150 — Is Selected Component Last Component ?  No / Yes

152 — Sort Completed List In Descending Order

154 — Remove Top Component

156 — Has Filtering Criteria Been Satisfied ?  No / Yes

158 — Is Iterative Filtering Desired ?  No / Yes

160 — Final Component Set Identified

EP 2 490 139 B1

10

**Fig. 3**

**Fig. 4**

**Fig. 5**

**Fig. 6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100042563 A1

**Non-patent literature cited in the description**

- **G MCLACHLAN ; D PEEL.** Finite Mixture Models. John Wiley & Sons, 2000